# EUROPEAN PATENT APPLICATION

(11) **EP 3 480 677 A1**
(43) Date of publication of application: **08.05.2019**
(21) Application number: 18203657.4
(22) Date of filing: 31.10.2018
(51) Int. Cl.: G06F 1/26

(54) **MODULAR HUB**

(30) Priority: 03.11.2017 US 201762581046 P
(71) Applicant: SIMPower Technology Inc., Taipei City 11469 (TW)
(72) Inventor: Li, Dong-Sheng, 11469 Taipei City (TW); Yang, Shih-Shin, 11469 Taipei City (TW)
(74) Representative: Becker Kurig Straus

(57) **Abstract**

A modularized hub is adapted to be electrically connected to an upstream device, an AC power source and at least one downstream device that are located outside the modularized hub. The upstream device includes a connection port. The connection port supports a power supply mode and a charging mode. The modularized hub includes a main body base and a module structure. The main body base includes an AC connection terminal, a first power supply module, and a base connection terminal. The module structure includes a module connection terminal, a second power supply module, an upstream transmission line, a control circuit, and at least one downstream connection terminal.

## Description

### FIELD OF THE INVENTION

The present invention relates to a modular hub, and more particularly to a modular hub having a control circuit for active power distribution.

### BACKGROUND OF THE INVENTION

Nowadays, consumers may use the USB port of a personal computer for charging. There are various mobile devices on the market. A person may own at least two mobile devices, such as a smart phone, an external hard disk, a tablet computer, a digital camera, and the like. The number of USB ports on small-sized notebooks may be not enough for consumers. The user may purchase a USB hub to increase the number of USB ports. Although a conventional USB hub allows multiple mobile devices to transmit data at the same time, the USB ports of a normal apparatus provide a limited power source. In order to avoid the overcurrent of the USB port, the mobile devices are allowed to be charged in a standard mode only. The hub is unable to provide a fast charging function. In addition, in order to satisfy the fast charging mode of a plurality of mobile devices, the USB hub must have a power supply with a high power, so the size and the manufacturing cost of the USB hub are also increased. When the size of the USB hub is too large, it is not easy for the user to carry. In addition, when the manufacturing cost of the USB hub is too high, it is not beneficial for the USB hub to be put into mass production.

Therefore, those with ordinary knowledge in the field consider how to design a hub that is easy to carry, has a variety of choices, and facilitates mass production.

### SUMMARY OF THE INVENTION

In order to solve the above problem, the primary object of the present invention is to provide a modular hub which has the advantages of being easy to carry and facilitating mass production. Moreover, it can be combined with modular devices of different specifications and different interfaces, so consumers have more diversified choices and flexibility in use.

A modularized hub of the present invention is adapted to be electrically connected to an upstream device, an AC power source and at least one downstream device that are located outside the modularized hub. The upstream device includes a connection port. The connection port supports a power supply mode and a charging mode. The modularized hub comprises a main body base and a module structure. The main body base comprises an AC connection terminal, a first power supply module, and a base connection terminal. The module structure includes a module connection terminal, a second power supply module, an upstream transmission line, a control circuit, and at least one downstream connection terminal. Wherein, the AC connection terminal is adapted to be electrically connected to the AC power source. The first power supply module is electrically connected to the AC connection terminal. The base connection terminal includes a first data transmission line and a first power transmission line. The first data transmission line and the first power transmission line are connected to the first power supply module. The module connection terminal corresponds to the base connection terminal. The module connection terminal includes a second data transmission line and a second power transmission line. When the module connection terminal is connected to the base connection terminal, the second data transmission line is electrically connected to the first data transmission line, and the second power transmission line is electrically connected to the first power transmission line. The second power supply module is electrically connected to the second data transmission line and the second power transmission line. The upstream transmission line is adapted to be electrically connected to the connection port. The upstream transmission line includes a third data transmission line and a third power transmission line. The third power transmission line is electrically connected to the second power supply module. The control circuit is electrically connected between the second data transmission line and the third data transmission line. The upstream device can be switched between the power supply mode and the charging mode through communication between the control circuit, the second power supply module and the upstream device. The downstream connection terminal includes a fourth power transmission line. The fourth power transmission line is electrically connected to the second power supply module. The module structure is detachably coupled to the main body base.

According to the above modularized hub, when the AC connection terminal is electrically connected to the AC power source, the connection port is in the charging mode; when the AC connection terminal is not electrically connected to the AC power source, the connection port is in the power supply mode.

According to the above modularized hub, the module structure further includes a signal controller, and the signal controller is electrically connected to the control circuit and the second power supply module.

According to the above modularized hub, the downstream connection terminal further includes a fourth data transmission line, and the fourth data transmission line is electrically connected to the signal controller.

According to the above modularized hub, the upstream transmission line further includes a fifth data transmission line, the fifth data transmission line is electrically connected to the signal controller, and the signal controller is adapted to perform data transmission between the upstream device and the downstream device.

According to the above modularized hub, the upstream transmission line is a USB type-C transmission line, and the upstream device is a notebook computer.

According to the above modularized hub, the downstream connection terminal is a USB connection terminal, an HDMI connection terminal or an RJ45 connection terminal. The downstream device is a smart phone or a display screen.

According to the above modularized hub, the main body base is combined with the module structure by a magnetic means or a groove in cooperation with a slide rail.

According to the above modularized hub, the main body base further includes a button structure, and the module structure further includes a T-shaped recess corresponding to the button structure.

The above modularized hub further comprises an external component. The external component is coupled to the main body base and the module structure by means of hooks.

According to the above modularized hub, the module structure further includes an energy storage component. The energy storage component is electrically connected to the second power supply module. When the AC connection terminal is electrically connected to the AC power source, the energy storage component is in the charging mode; when the AC connection terminal is not electrically connected to the AC power source, the energy storage component is in the power supply mode.

According to the above modularized hub, the module structure further includes a display screen and a digital image processing module. The digital image processing module is electrically connected to the display screen, the upstream transmission line, and the downstream connection terminal.

### BRIEF DESCRIPTION OF THE DRAWINGS

FIG. 1A is a schematic view of the modularized hub 10 of the first embodiment electrically connected to the upstream device 7, the AC power source 6 and the downstream device 8;
FIG. 1B and FIG. 1C are perspective views of the modular hub 10 of the first embodiment;
FIG. 2A and FIG. 2B are perspective views showing the main body base 12 and the module structure 13 that are separated from each other;
FIG. 3A is a perspective view of the modular hub 20 of the second embodiment;
FIG. 3B is an exploded view of the external component 24, the main body base 12 and the module structure 13;
FIG. 4A illustrates the main body base 32 of the modular hub 30 of the third embodiment;
FIG. 4B illustrates the module structure 33 of the modular hub 30;
FIG. 5 is a schematic diagram of the modular hub 40 of the fourth embodiment electrically connected to the upstream device 7, the AC power source 6 and the downstream device 8;
FIG. 6A is a schematic diagram of the modular hub 50 of the fifth embodiment electrically connected to the upstream device 7, the AC power source 6 and the downstream device 8; and
FIG. 6B is a perspective view of the modular hub 50.

### DETAILED DESCRIPTION OF THE PREFERRED EMBODIMENTS

Embodiments of the present invention will now be described, by way of example only, with reference to the accompanying drawings.

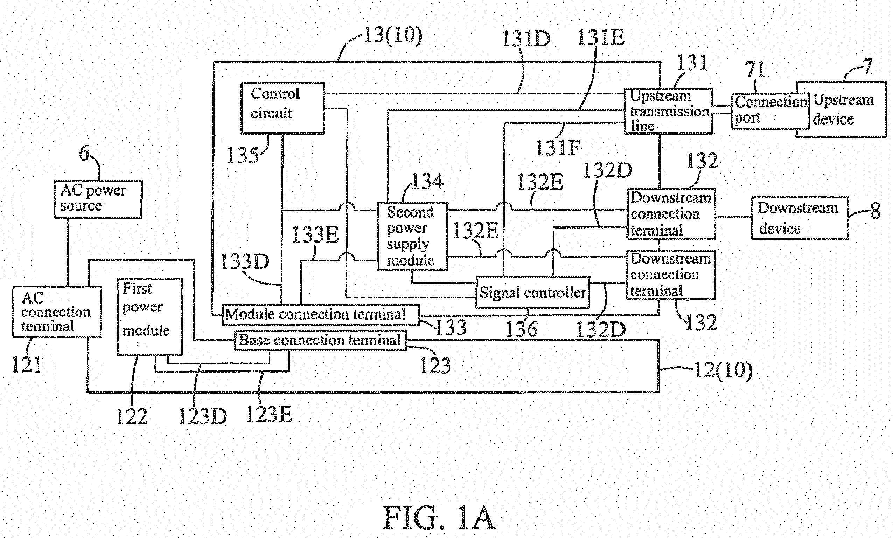

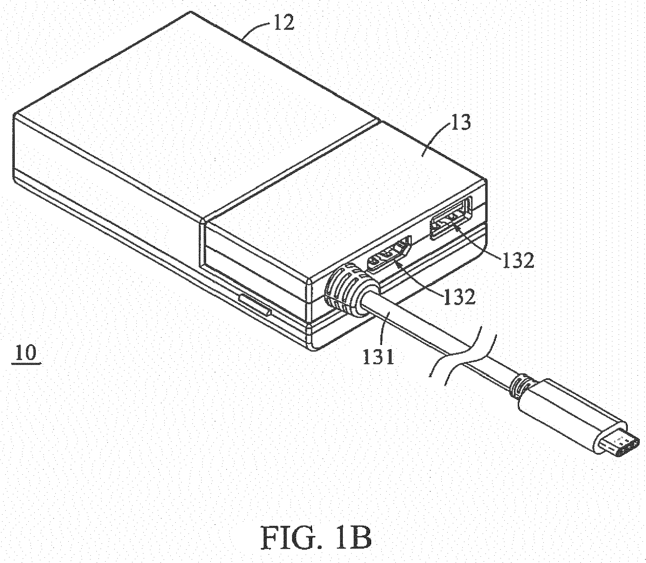

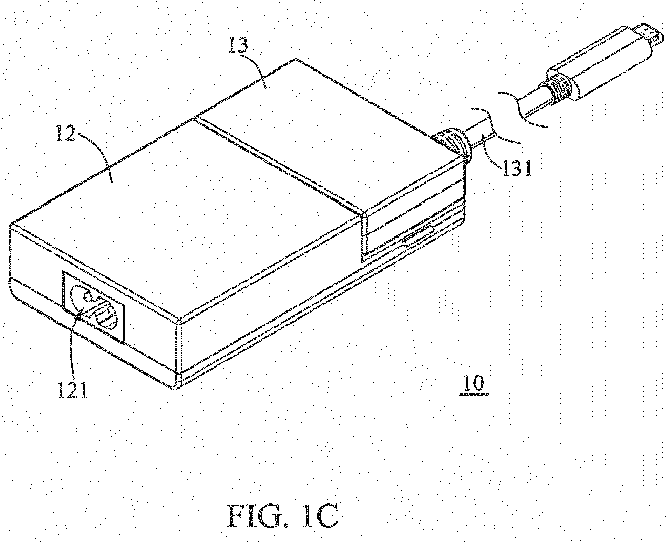

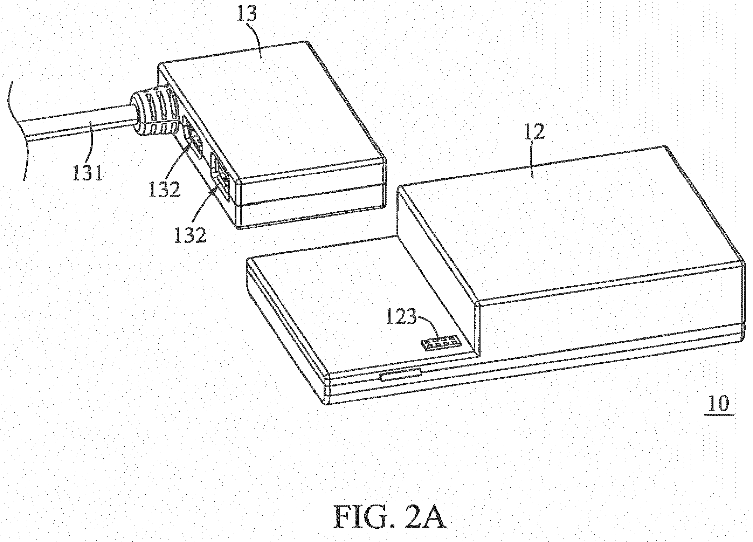

Please refer to FIG. 1A, FIG. 1B and FIG. 1C. FIG. 1A is a schematic view of the modularized hub 10 of the first embodiment electrically connected to an upstream device 7, an AC power source 6 and a downstream device 8. FIG. 1B and FIG. 1C are perspective views of the modular hub 10 of the first embodiment. The modular hub 10 comprises a main body base 12 and a module structure 13. The module structure 13 is detachably coupled to the main body base 12 (please refer to FIG. 2A first). The main body base 12 includes an AC connection terminal 121, a first power supply module 122, and a base connection terminal 123. The module structure 13 includes a module connection terminal 133, a second power supply module 134, an upstream transmission line 131, a control circuit 135, at least one downstream connection terminal 132 (in this embodiment, two downstream connection terminals 132 are taken as an example), and a signal controller 136. In addition, the AC connection terminal 121 is adapted to be electrically connected to an AC power source 6 located outside the modular hub 10. The first power supply module 122 is electrically connected to the AC connection terminal 121. The first power supply module 122 includes, for example, an AC/DC converter adapted to convert AC power output from AC power source 6 into DC power. In addition, the base connection terminal 123 includes a first data transmission line 123D and a first power transmission line 123E. The first data transmission line 123D and the first power transmission line 123E are connected to the first power supply module 122, so the first power supply module 122 can conduct the power output from the AC power source 6 to the base connection terminal 123 (please refer to FIG. 2A first).

In the above, the modular hub 10 is adapted to be electrically connected to an external upstream device 7 and at least one external downstream device 8. The upstream device 7 is, for example, a notebook computer. The downstream device 8 is, for example, a smart phone or a display the screen. The upstream device 7 includes a connection port 71, such as a USB type C interface. The connection port 71 supports a power supply mode and a charging mode. In other words, the upstream device 7 (notebook) supports the power supply mode and the charging mode.

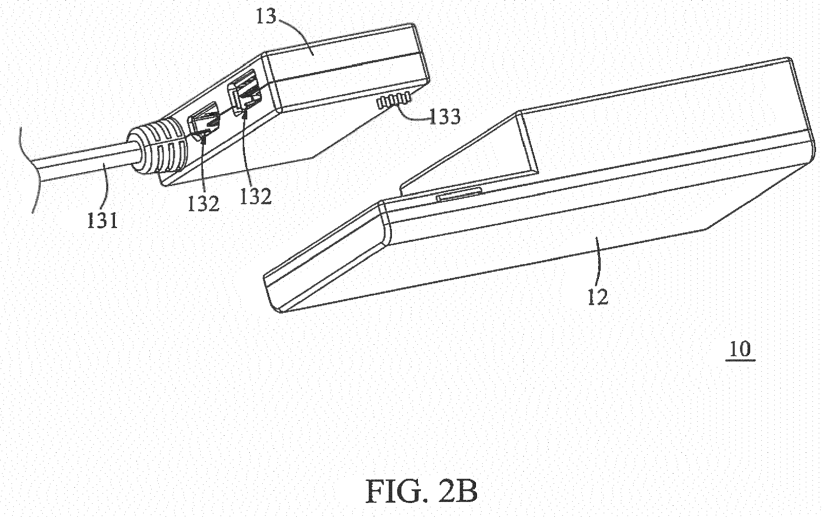

Please refer to FIG. 1A again and FIG. 2A and FIG. 2B. FIG. 2A and FIG. 2B are perspective views showing the main body base 12 and the module structure 13 that are separated from each other. The module connection terminal 133 of the module structure 13 corresponds to the base connection terminal. The module connection terminal 133 includes a second data transmission line 133D and a second power transmission line 133E. When the module connection terminal 133 is connected to the base connection terminal, the second data transmission line 133D is electrically connected to the first data transmission line 123D, and the second power transmission line 133E is electrically connected to the first power transmission line 123E. Therefore, the module structure 13 can receive power and signals from the main body base 12.

In addition, the second power supply module 134 is electrically connected to the second data transmission line 133D and the second power transmission line 133E. The upstream transmission line 131 is adapted to be electrically connected to the connection port 71. The upstream transmission line 131 includes a third data transmission line. 131D, a third power transmission line 131E, and a fifth data transmission line 131F. The third power transmission line 131E is electrically connected to the second power supply module 134. In addition, the downstream connection terminal 132 is, for example, a USB connection terminal (corresponding to a smart phone), an HDMI connection terminal (corresponding to a display screen), or an RJ45 connection terminal. The downstream connection terminal 132 includes a fourth power transmission line 132E and a fourth data transmission line 132D. The fourth power transmission line 132E is electrically connected to the second power supply module 134. Both the fourth data transmission line 132D and the fifth data transmission line 131F are electrically connected to the signal controller 136. The signal controller 136 is adapted to perform data transmission between the upstream device 7 and the downstream device 8. In the above, since the third power transmission line 131E and the fourth power transmission line 132E are electrically connected to the second power supply module 134, the power of by the upstream device 7 can be transmitted to the downstream device 8.

In addition, the control circuit 135 is electrically connected between the second data transmission line 133D and the third data transmission line 131D. Through the communication between the control circuit 135 of the module structure 13, the second power supply module 134 and the upstream device 7, the upstream device 7 can be switched between the power supply mode and the charging mode. In detail, when the module structure 13 is combined with the main body base 12, but the AC connection terminal 121 is not electrically connected to the AC power source 6, the connection port 71 of the upstream device 7 is in the power supply mode, thereby enabling the control circuit 135 and the signal controller 136 to operate and allowing the control circuit 135 to communicate with the second power supply module 134 at any time. The control circuit 135 can inform the upstream device 7 of the current status of the second power supply module 134 at any time. On the contrary, when the AC connection terminal 121 is electrically connected to the AC power source 6, the second power supply module 134 receives the power of the first power supply module 122, and the control circuit 135 instructs the upstream device 7 to stop the power supply mode. After that, the control circuit 135 requests the second power supply module 134 to output the voltage to the upstream transmission line 131, and then instructs the upstream device 7 to switch the connection port 71 to the charging mode, and finally adjusts the output voltage value required for the upstream device 7.

When the module structure 13 is detached from the main body base 12, the second power supply module 134 loses electrical connection with the first power supply module 122, and the control circuit 135 immediately instructs the upstream device 7 to stop the charging mode of the connection port 71. Thereafter, the control circuit 135 requests the second power supply module 134 to cut off the power supply to the upstream transmission line 131. The control circuit 135 instructs the upstream device 7 to restore the connection port 71 to the power supply mode, so that the power of the upstream device 7 can be supplied to the downstream device 8. Therefore, compared with the conventional USB hub, after the module structure 13 of the modular hub 10 of the embodiment is separated from the main body base 12, The downstream device 8 (smart phone) can still charge or transmit data via the module structure 13 and the upstream device 7, so the user can charge or transmit data to smart phones by carrying the module structure 13. Since the module structure 13 is lighter and smaller, this embodiment may be directed to mass production for the module structure 13. In addition, because it is not required for the user to carry the main body base, the main body base 12 may have a large size to accommodate the high-power first power supply module 122 (corresponding to the power supply). In addition to the module structure 13, the main body base 12 can be selectively combined with other different modular devices, so it is more flexible for use.

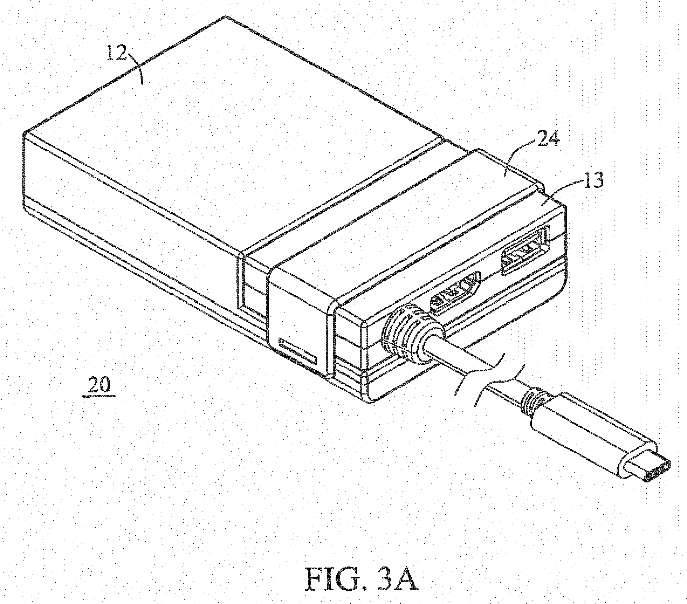

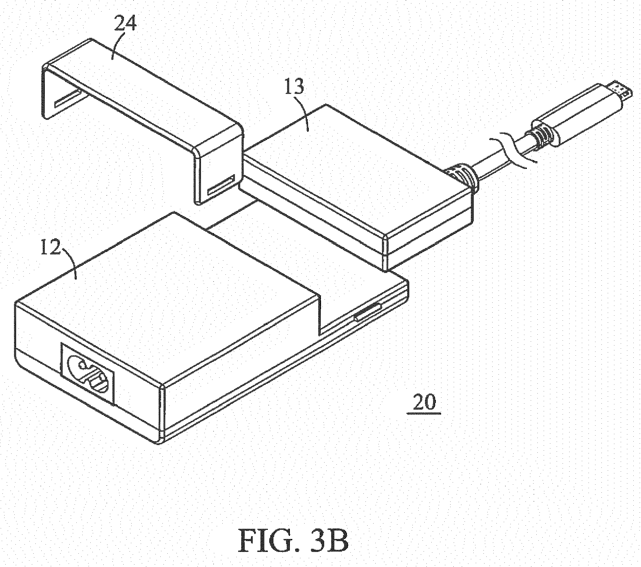

Please refer to FIG. 3A and FIG. 3B. FIG. 3A is a perspective view of the modular hub 20 of the second embodiment. FIG. 3B is an exploded view of the external component 24, the main body base 12 and the module structure 13. The difference between the modular hub 20 and the modular hub 10 is that the modular hub 20 further includes an external component 24. The external component 24 is coupled to the main body base 12 and the module structure 13 by means of hooks. In this way, the module structure 13 can be more firmly combined on the main body base 12. After the external component 24 is removed, the module structure 13 can also be quickly separated from the main body base 12.

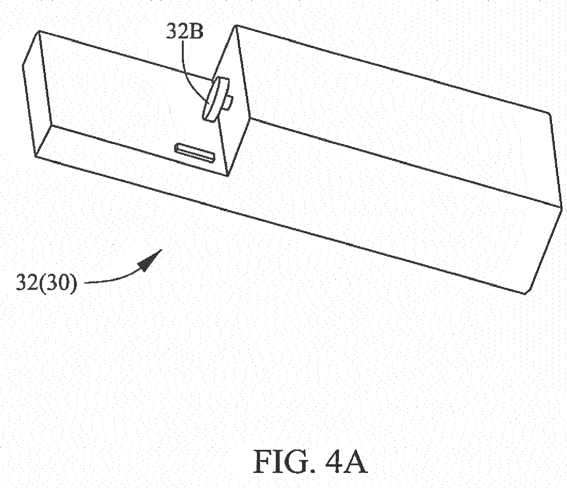

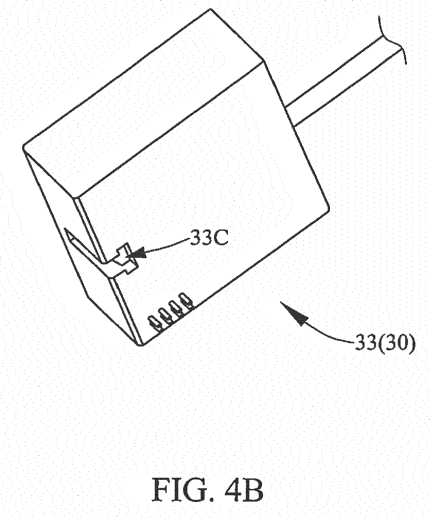

Please refer to FIG. 4A and FIG. 4B. FIG. 4A illustrates the main body base 32 of the modular hub 30 of the third embodiment. FIG. 4B illustrates the module structure 33 of the modular hub 30. The difference between the modular hub 30 and the modular hub 10 is that the main body base 32 of the modular hub 30 further includes a button structure 32B, and the module structure 33 of the modular hub 30 further includes a T-shaped recess 33C corresponding to the button structure 32B. In this way, the module structure 33 can be more firmly engaged with the main body base 32 via the button structure 32B and the T-shaped recess 33C, thereby strengthening the structural strength of the modular hub 30. In the above, in addition to the use of the button structure to enhance the assembly strength, a person skilled in the art may combine the module structure 33 with the main body base 32 by a magnetic means or a groove in cooperation with a slide rail. The structural strength of the modular hub 30 can also be enhanced.

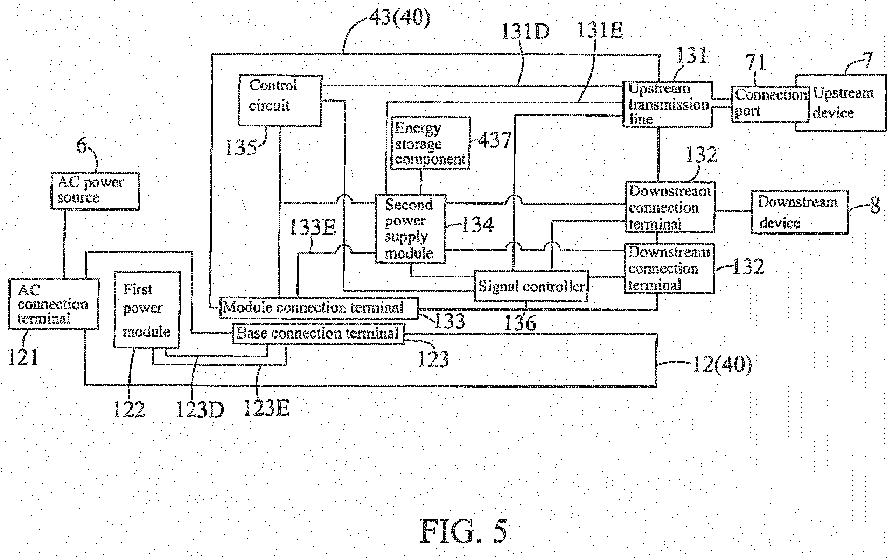

Please refer to FIG. 5. FIG. 5 is a schematic diagram of the modular hub 40 of the fourth embodiment electrically connected to the upstream device 7, the AC power source 6, and the downstream device 8. The difference between the modular hub 40 and the modular hub 10 is that the module structure 43 of the modular hub 40 further includes an energy storage component 437, such as a battery or a capacitor. The energy storage component 437 is electrically connected to the second power supply module 134. When the AC connection terminal 121 is electrically connected to the AC power source 6, the energy storage component 437 is in the charging mode. On the contrary, when the AC connection terminal 121 is not electrically connected to the AC power source 6, the energy storage component 437 is in the power supply mode. Therefore, each of the modular hub 40 and the detached module structure 43 can be used as a power bank. In the above, the energy storage component 437 is located outside the second power supply module 134, but the energy storage component 437 may be disposed inside the second power supply module 134. In addition, the module structure 43 further includes a wireless charging transmitter or a memory (not shown), so the module structure 43 can also be wirelessly charged or used as a flash drive.

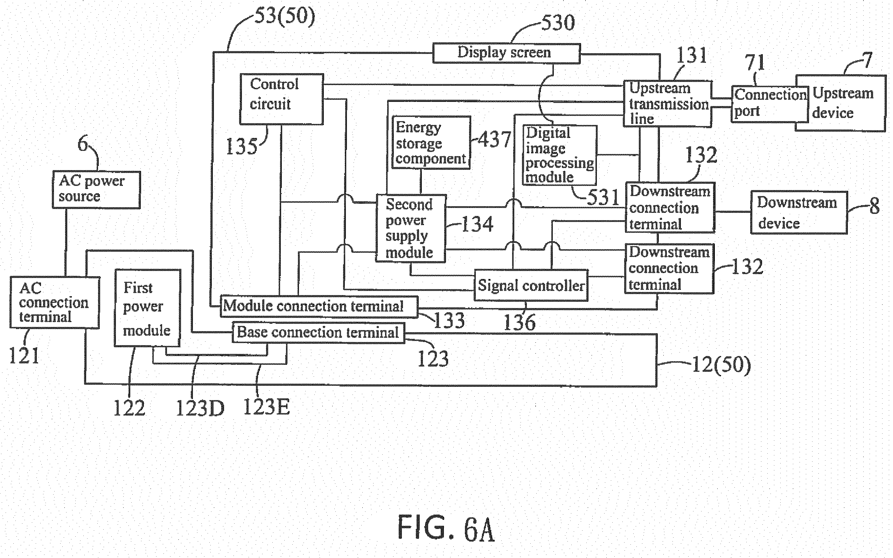

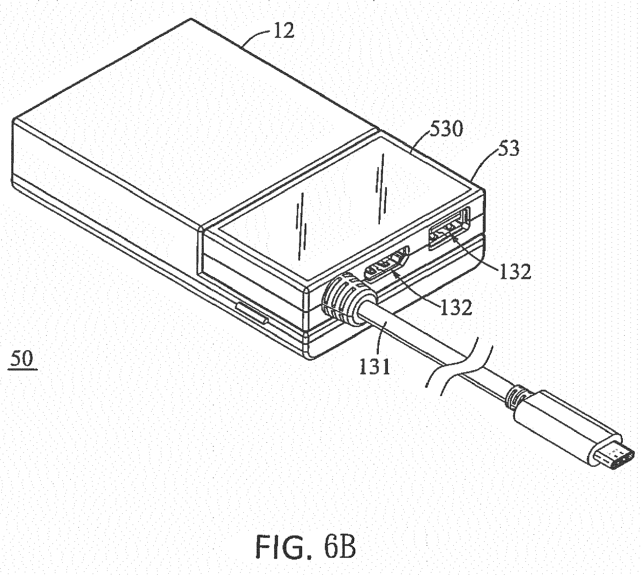

Please refer to FIG. 6A and FIG. 6B. FIG. 6A is a schematic diagram of the modular hub 50 of the fifth embodiment electrically connected to the upstream device 7, the AC power source 6, and the downstream device 8. FIG. 6B is a perspective view of the modular hub 50. The difference between the modular hub 50 and the modular hub 40 is that the module structure 53 of the modular hub 50 further includes a display screen 530 and a digital image processing module 531. The display screen 530 is disposed on the surface of the module structure 53. The digital image processing module 531 is electrically connected to the display screen 530, the upstream transmission line 131, and the downstream connection terminal 132. The digital image processing module 531 is configured to transmit image data. In detail, when the upstream device 7 or the downstream device 8 inputs image data to the digital image processing module 531, the digital image processing module 531 transmits the image data to the display screen 530. Thereafter, the display screen 530 displays the image data. In the above, the digital image processing module 531 is configured to transmit the image data, as an example. However, a person skilled in the art knows that the digital image processing module 531 can transmit digital data of different types in addition to transmitting the image data.

In summary, the modular hub of the present invention has the advantages of being easy to carry and facilitating mass production. Moreover, the present invention can combine different modular devices, so it is more flexible for use.

Although particular embodiments of the present invention have been described in detail for purposes of illustration, various modifications and enhancements may be made without departing from the spirit and scope of the present invention. Accordingly, the present invention is not to be limited except as by the appended claims.

## Claims

1. A modularized hub, adapted to be electrically connected to an upstream device, an AC power source and at least one downstream device that are located outside the modularized hub, the upstream device including a connection port, the connection port supporting a power supply mode and a charging mode, the modularized hub comprising:
a main body base, comprising:
an AC connection terminal, adapted to be electrically connected to the AC power source;
a first power supply module, electrically connected to the AC connection terminal; and
a base connection terminal, including a first data transmission line and a first power transmission line, the first data transmission line and the first power transmission line being connected to the first power supply module;
a module structure, comprising:
a module connection terminal, corresponding to the base connection terminal, the module connection terminal including a second data transmission line and a second power transmission line, wherein when the module connection terminal is connected to the base connection terminal, the second data transmission line is electrically connected to the first data transmission line, and the second power transmission line is electrically connected to the first power transmission line;
a second power supply module, electrically connected to the second data transmission line and the second power transmission line;
an upstream transmission line, adapted to be electrically connected to the connection port, the upstream transmission line including a third data transmission line and a third power transmission line, the third power transmission line being electrically connected to the second power supply module;
a control circuit, electrically connected between the second data transmission line and the third data transmission line, wherein the upstream device can be switched between the power supply mode and the charging mode through communication between the control circuit, the second power supply module and the upstream device, and
at least one downstream connection terminal, including a fourth power transmission line, the fourth power transmission line being electrically connected to the second power supply module;
wherein the module structure is detachably coupled to the main body base.

2. The modularized hub as claimed in claim 1, wherein when the AC connection terminal is electrically connected to the AC power source, the control circuit instructs the upstream device to switch the connection port to the charging mode; when the AC connection terminal is not electrically connected to the AC power source, the control circuit instructs the upstream device to switch the connection port to the power supply mode.

3. The modularized hub as claimed in claim 1, wherein the module structure further includes a signal controller, and the signal controller is electrically connected to the control circuit and the second power supply module.

4. The modularized hub as claimed in claim 3, wherein the downstream connection terminal further includes a fourth data transmission line, and the fourth data transmission line is electrically connected to the signal controller.

5. The modularized hub as claimed in claim 4, wherein the upstream transmission line further includes a fifth data transmission line, the fifth data transmission line is electrically connected to the signal controller, and the signal controller is adapted to perform data transmission between the upstream device and the downstream device.

6. The modularized hub as claimed in claim 1, wherein the upstream transmission line is a USB type-C transmission line, and the upstream device is a notebook computer.

7. The modularized hub as claimed in claim 1, wherein the downstream connection terminal is a USB connection terminal, an HDMI connection terminal or an RJ45 connection terminal, and the downstream device is a smart phone or a display screen.

8. The modularized hub as claimed in claim 1, wherein the main body base is combined with the module structure by a magnetic means or a groove in cooperation with a slide rail.

9. The modularized hub as claimed in claim 1, wherein the main body base further includes a button structure, and the module structure further includes a T-shaped recess corresponding to the button structure.

10. The modularized hub as claimed in claim 1, further comprising an external component, the external component being coupled to the main body base and the module structure by means of hooks.

11. The modularized hub as claimed in claim 1, wherein the module structure further includes an energy storage component, the energy storage component is electrically connected to the second power supply module, wherein when the AC connection terminal is electrically connected to the AC power source, the energy storage component is in the charging mode; when the AC connection terminal is not electrically connected to the AC power source, the energy storage component is in the power supply mode.

12. The modularized hub as claimed in claim 11, wherein the module structure further includes a display screen and a digital image processing module, and the digital image processing module is electrically connected to the display screen, the upstream transmission line, and the downstream connection terminal.
